# EUROPÄISCHE PATENTSCHRIFT

(11) **EP 2 951 061 B1**
(45) Veröffentlichungstag und Bekanntmachung des Hinweises auf die Patenterteilung: **09.01.2019**
(21) Anmeldenummer: 14701112.6
(22) Anmeldetag: 22.01.2014
(51) Int. Cl.: B62D 29/04, F16F 7/12, B60R 19/34, B62D 21/15

(54) **KAROSSERIE FÜR EIN KRAFTFAHRZEUG**
BODY FOR A MOTOR VEHICLE
CARROSSERIE DE VÉHICULE AUTOMOBILE

(30) Priorität: 31.01.2013 DE 102013201615
(43) Veröffentlichungstag der Anmeldung: 09.12.2015
(73) Patentinhaber: Bayerische Motoren Werke Aktiengesellschaft, 80809 München (DE)
(72) Erfinder: BÖGLE, Christian, 81479 München (DE); LUKASZEWICZ, Dirk, 86150 Augsburg (DE)
(86) Internationale Anmeldenummer: PCT/EP2014/051252
(87) Internationale Veröffentlichungsnummer: WO 2014/118060

(56) Entgegenhaltungen:
- EP-A1- 2 236 380
- EP-A2- 0 497 142
- DE-A1- 19 635 285
- DE-A1-102006 058 604
- JP-A- 2003 054 442

## Beschreibung

Die vorliegende Erfindung betrifft eine Karosserie für ein Kraftfahrzeug mit einem Träger, insbesondere einem Längsträger, der aus faserverstärkten Kunststoff, insbesondere kohlefaserverstärkten Kunststoff, ausgebildet ist und wobei der Träger insbesondere ein tragendes Strukturelement der Karosserie bildet und derart ausgelegt ist, dass er im Falle einer Kollision zu einem Abbau einer Kollisionsenergie maßgeblich beitragen kann.

Es ist beispielsweise durch die DE 10 2006 058604 bekannt, in einer Kraftfahrzeugkarosserie einen Längsträger, der in einem Kollisionslastpfad angeordnet ist, aus kohlefaserverstärkten Kunststoff auszubilden und diesen an einer bestimmten Stelle zu schwächen, so dass ein Versagen des kohlefaserverstärkten Kunststoffträgers an der geschwächten Stelle eintritt und sich von dieser Stelle aus fortpflanzt. Eine derartige Vorgehensweise bei einem tragenden Teil aus faserverstärktem Kunststoff wird auch Triggerung genannt.

Es ist die Aufgabe der vorliegenden Erfindung, eine Karosserie für ein Kraftfahrzeug mit einem Träger, insbesondere einem Längsträger, der aus faserverstärkten Kunststoff, insbesondere kohlefaserverstärkten Kunststoff, ausgebildet ist, zu schaffen, wobei ein Auslösen oder Steuern eines Versagens des Trägers bei einer bestimmten Kollisionslast mit einfachen Mitteln erfolgt und ein Kraftspitze zu Beginn des Versagens geeignet reduziert werden kann.

Diese Aufgabe wird durch eine Karosserie für ein Kraftfahrzeug gelöst, die die Merkmale von Patentanspruch 1 aufweist. Insbesondere hat die Karosserie für ein Kraftfahrzeug einen Träger, der aus faserverstärkten Kunststoff ausgebildet ist und der als tragendes Strukturelement eine in einem Kollisionsfall des Kraftfahrzeugs Kollisionsenergie absorbierende Wirkung hat. Eine Stirnseite des Trägers ist schräg in Bezug auf eine Lastebene, die senkrecht zu einem Kollisionslastpfad verläuft, ausgebildet.

Der Träger ist insbesondere ein Längsträger eines Kraftfahrzeugs, beispielsweise ein linker oder rechter vorderer Längsträger, der bei Kraftfahrzeugen mit Frontmotor auch Motorträger genannt wird. Der faserverstärkte Kunststoff ist beispielsweise kohlefaserverstärkter Kunststoff. Als tragendes Strukturelement ist ein Karosserieelement gemeint, das zu einer sogenannten Kollisionsfestigkeit (Crashfestigkeit) der Karosserie in einem Kollisionsfall beiträgt. Ein tragendes Strukturelement einer Karosserie kann ferner in gewissem Umfang eine Kollisionsenergie absorbieren bzw. abbauen. Eine Kollision kann beispielsweise eine Frontalkollision des Kraftfahrzeugs mit einem Kollisionsgegner, wie einem anderen Kraftfahrzeug oder einem festen Hindernis sein. Schräg in Bezug auf eine Lastebene bedeutet nicht parallel zu der Lastebene. Eine Stirnseite des Trägers kann eine erste, beispielsweise vordere, Stirnseite oder eine zweite, beispielsweise hintere, Stirnseite des Trägers sein. Eine Stirnseite ist eine Seite, die sich im Wesentlichen quer zu einer Längsachse des Trägers erstreckt.

Durch die lediglich schräge Ausbildung der Stirnseite des Trägers zu der Lastebene ist eine besonders einfache Steuerung des Versagens des Trägers, d.h. eine besonderes einfache Triggerung, des Trägers möglich. Es ist keine aufwendige Nachbearbeitung des Trägers nach seiner Herstellung notwendig, um eine derartige Triggerung zu erzielen. Durch die schräge Anordnung der Stirnseite gegenüber der Stirnseite des Trägers wirkt eine Kollisionslast nicht auf einen gesamten Querschnitt des Trägers sondern lediglich auf einen Teil des Querschnitts des Trägers. Damit ist die Kollisionslast lediglich auf den Teil des Querschnitts konzentriert, so dass bereits bei einer geringeren Kraft ein sprödes Versagen des Trägers eintritt.

Bevorzugt beträgt ein Winkel der Stirnseite des Trägers gegenüber der Lastebene 1° bis 14°. Vorteilhafter beträgt der Winkel 5° bis 10°.

Bei diesem Winkel ist eine besonders geeignete Auslösung eines Versagens des Trägers bei einer optimalen Kraft/Weg-Kurve in einem Kollisionslastfall möglich. Die Kraft/Weg-Kurve ist durch eine anfängliche elastische Verformung des Trägers und ein sich anschließende sprödes Versagen des Trägers ausgeprägt. Eine optimale Kraft/Weg-Kurve verläuft möglichst geradlinig bei gleicher Kraft, wobei ein anfänglicher Spitzenwert der Kraft am Beginn des Weges, also bei der anfänglichen elastischen Verformung, nicht zu hoch ausfallen sollte, d.h. nicht Wesentlich über dem sich anschließenden Kraftniveau des spröden Versagens liegen sollte. Eine sogenannte Triggerung des Trägers über die Stirnseite, die schräg zu einer Lastebene ausgebildet ist, ist demnach geeignet derart ausgebildet, dass die anfängliche Kraftspitze möglichst gering ausfällt.

Weiterhin weist der Kollisionslastpfad ein Plattenelement auf, wobei eine der Stirnseite des Trägers zugewandte Seite des Plattenelements in Bezug auf die Stirnseite des Trägers schräg und teilweise direkt oder indirekt an der Stirnseite des Trägers anliegend ausgebildet ist.

Das Plattenelement, insbesondere die der Stirnseite zugewandte Seite des Plattenelements, bildet in diesem Fall die Lastebene aus, die schräg zu der Stirnseite des Trägers verläuft. Wenn bei einer Kollision das Plattenelement gegen die Stirnseite des Trägers gedrückt wird, so wird es zu Beginn nicht gegen die gesamte Stirnseite des Trägers, sondern nur gegen einen Teil der Stirnseite des Trägers gedrückt, so dass eine anfänglich aufzubringende Kraft, bei der der Träger versagt, reduziert ist und eine wie vorstehend beschriebene Kraftspitze verringert ist. Für eine Energieabsorption bzw. einen Energieabbau ist ein möglichst gleichmäßiger Kraftverlauf über einen Weg vorteilhaft. Eine anfängliche elastische Verformung des Trägers unter der Kollisionslast ist bei der geringeren Lasteinleitfläche in den Träger geringer, so dass auch die anfängliche Kraftspitze geringer ist.

Weiterhin weist bei der Karosserie der Kollisionslastpfad zusätzlich zu dem Plattenelement einen Stoßfängerquerträger und insbesondere ein Deformationselement auf. Das Deformationselement soll bei kleinen Kollisionen bis zu einer Kollisionsenergieschwelllast eine Energieabsorption durch Deformation bewirken, so dass bis zu der Kollisionsenergieschwelllast keine weiteren tragenden Elemente, insbesondere der Träger, beschädigt werden. Der Stoßfängerquerträger kann ein vorderer Stoßfängerquerträger oder ein hinterer Stoßfängerquerträger sein. Im Falle des vorderen Stoßfängerquerträgers ist der Träger bevorzugt der vordere Längsträger. Vorteilhaft ist der Stoßfängerquerträger über ein sogenanntes Deformationselement mit dem Plattenelement gekoppelt, wobei das Plattenelement als Verbindungselement zwischen dem Deformationselement und der vorderen Stirnseite des Trägers dient. Alternativ kann das erfindungsgemäße Plattenelement auch mit der hinteren Stirnseite des Trägers gekoppelt sein und erfindungsgemäß mit dem Träger zusammenwirken.

In einer besonderen Ausführungsform der vorstehend beschriebenen Karosserie kann die Stirnseite des Längsträgers im Bezug auf eine Ebene, die senkrecht zu einer Längsachse des Trägers verläuft, schräg ausgebildet sein.

Mit anderen Worten ist der Träger zumindest an einem Ende abgeschrägt ausgebildet. Dies ist bei einer Herstellung des Trägers besonders vorteilhaft, da der Träger einfach durch schräges Abschneiden an einem seiner Enden erfindungsgemäß hergestellt werden kann. Hiermit kann also mit besonders einfachen Mitteln ein Versagensverhalten des Trägers, insbesondere durch Abschrägen des Trägers, vorteilhaft gesteuert werden.

Alternativ oder zusätzlich zur Abschrägung der Stirnseite des Trägers in Bezug auf seine Längsachse kann der Träger insgesamt schräg zu der Lastebene, die beispielsweise durch die zugewandte Seite des Plattenelements gebildet wird, ausgebildet sein.

Die Stirnseite des Trägers kann bevorzugt derart ausgebildet sein, dass sie in einer Ebene liegt.

Gemäß einer Weiterbildung der Karosserie der vorliegenden Erfindung ist der Träger ein Profil mit einem offenen Querschnitt oder ein Profil mit einem geschlossenen Querschnitt. Bevorzugt ist der geschlossene Querschnitt ein sogenanntes Flechtprofil.

Vorteilhaft ist insgesamt die Stirnseite in Bezug auf den Kollisionslastpfad derart ausgebildet, dass zu Beginn der Kollision eine Last lediglich auf einen Teil der Stirnseite wirkt, zum Beispiel auf einen Punkt als eine Punktlast oder Linie als eine Linienlast oder auf eine zumindest kleinere Flächen als Flächenlast auf die Stirnseite des Trägers wirkt. Mit anderen Worten soll die Kollisionslast über den Kollisionslastpfad nicht auf die gesamte Stirnseite des Trägers sondern nur auf einen Teil der Stirnseite des Trägers wirken.

Der Träger ist insbesondere derart ausgebildet, dass er ab einer vorgegebenen Kollisionsschwelllast an der Stirnseite beginnend spröde versagt.

Gemäß einer Weiterbildung der vorliegenden Erfindung kann der Träger an den Kanten der Stirnseite auch angefast sein.

Dies reduziert weiter vorteilhaft eine Kontaktfläche zwischen der der Stirnseite zugewandten Seite des Plattenelements.

Vorstehend beschriebene Merkmale und Weiterbildungen der Erfindung können soweit möglich unterschiedlich miteinander kombiniert werden.

Es folgt eine Kurzbeschreibung der Figuren.
- Fig. 1: ist eine schematische Seitenansicht eines Trägers einer Karosserie für ein Kraftfahrzeug gemäß einem ersten Ausführungsbeispiel der vorliegenden Erfindung.
- Fig. 2: ist eine schematische Ansicht eines Trägers einer Karosserie für ein Kraftfahrzeug gemäß einem zweiten Ausführungsbeispiel der vorliegenden Erfindung.
- Fig. 3: ist eine schematische Ansicht eines Trägers einer Karosserie für ein Kraftfahrzeug gemäß einem dritten Ausführungsbeispiel der vorliegenden Erfindung.

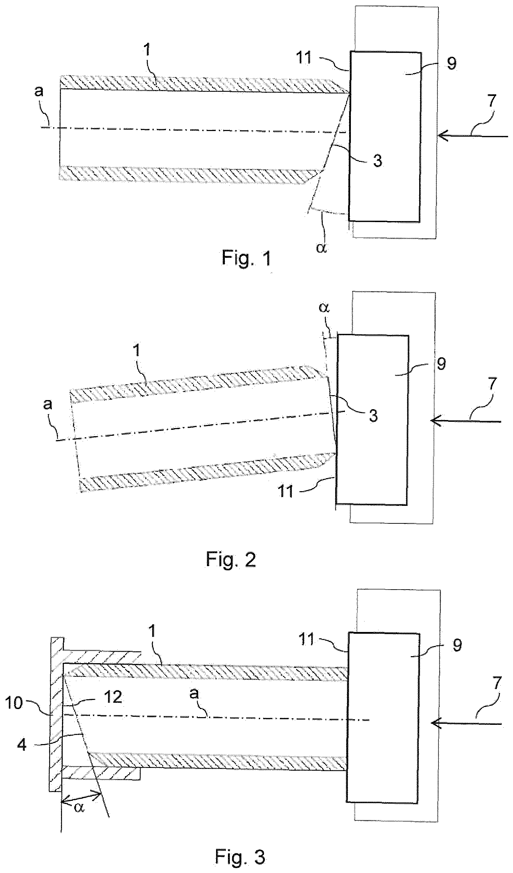

Nachstehend sind unter Bezugnahme auf Figuren 1 bis 3 Ausführungsbeispiele der vorliegenden Erfindung detailliert beschrieben.

Figur 1 zeigt einen vorderen Längsträger 1 einer Karosserie für ein Kraftfahrzeug gemäß einem ersten Ausführungsbeispiel. Der Längsträger 1 ist an seiner vorderen Stirnseite 3 gegenüber einer Längsachse a des Trägers um einen Winkel a, der bevorzugt 5 bis 10° beträgt, abgeschrägt. Eine Richtung einer Kollisionslast 7 entspricht in etwa einer Längsachse des Längsträgers 1. Ein Kollisionslastpfad 7 besteht im vorliegenden Fall aus einem nicht dargestellten Stoßfängerquerträger und einem nicht dargestellten bekannten Deformationselement, das über ein Plattenelement 9 mit einem vorderen Ende des Längsträgers 1 verbunden ist bzw. in Kontakt ist. Ein Kollisionslastpfad 7 verläuft demnach bei dem Kraftfahrzeug im Falle einer Frontalkollision im Wesentlichen in Fahrzeug-x-Richtung, d.h. in der Fahrzeuglängsrichtung, von dem Stoßfängerquerträger über das Deformationselement und das Plattenelement 9 in den Längsträger 1. Die vordere Stirnseite 3 des Längsträgers 1 ist nur teilweise in Kontakt mit einer dem Längsträger zugewandten Seite 11 des Plattenelements 9. Das Plattenelement 9 ist ein Verbindungselement zwischen dem Deformationselement und dem Längsträger 1.

Der Längsträger 1 besteht aus kohlefaserverstärkten Kunststoff, während das Plattenelement bevorzugt aus einem metallischen Werkstoff, beispielsweise Stahl, besteht. Der Träger 1 ist bevorzugt aus einem Flechtprofil hergestellt und weist einen geschlossenen Querschnitt auf. Die Stirnseite 3, d.h. die vordere Stirnseite 3 des Längsträgers 1, liegt in einer Ebene, wobei diese Ebene gegenüber der Hauptrichtung des Kollisionslastpfades um den Winkel α = 5 bis 10° abgeschrägt ist. Zusätzlich zu der schrägen Stirnseite 3 ist der Längsträger an Kanten der Stirnseite 3 angefast.

In einem Kollisionsfall, d.h. bei einer Frontalkollision des Kraftfahrzeugs, wird die Kollisionslast von dem Kollisionshindernis auf den nicht gezeigten Stoßfängerquerträger, das nicht gezeigte Deformationselement und schließlich das Verbindungselement 9, d.h. das erfindungsgemäße Plattenelement, auf die Stirnseite des Längsträgers 1 übertragen. Die Kollisionslast wird damit beginnend nur auf eine Teilfläche der Stirnseite übertragen, nämlich dem Teil der Stirnseite, der mit dem Plattenelement 9 direkt oder indirekt verbunden bzw. in Kontakt ist. Nach einer elastischen Verformung dieses Kontaktbereichs der Stirnseite 3 des Längsträgers 1 mit dem Plattenelement 9 beginnt bei Überschreitung einer gewissen Schwelllast und damit dem Ende einen elastischen Verformung des Längsträgers 1 ein sprödes Versagen des Längsträgers 1 an dem Kontaktbereich, wobei dabei Kollisionsenergie abgebaut wird. Da der Lasteintrag lediglich auf einen Teil der Stirnseite des Längsträgers 1 konzentriert ist, erfolgt dabei das spröde Versagen gewollt bzw. vorteilhaft früher, also bei einer geringeren Kraft als wenn die Last über das Plattenelement 9 vollständig auf die Stirnseite 3 des Längsträgers 1 drücken würde. Mit zunehmenden Weg des Plattenelements 9 schreitet der Sprödbruch am Beginn des Längsträgers 1 fort, bis er nach einer bestimmten Wegstrecke den gesamten Umfang des Längsträgers 1 erreicht hat und baut mit zunehmenden Weg Kollisionsenergie im Zuge des fortschreitenden spröden Versagens des Längsträgers 1 ab.

Nachstehend ist unter Bezugnahme auf Figur 2 ein zweites Ausführungsbeispiel der vorliegenden Erfindung erläutert.

Insbesondere sind Unterschiede zu dem ersten Ausführungsbeispiel erläutert, wobei eine Erläuterung der Merkmale, die das zweite Ausführungsbeispiel mit dem ersten Ausführungsbeispiel gemeinsam hat, im Wesentlichen weggelassen ist.

Im Unterschied zu dem ersten Ausführungsbeispiel hat ein Längsträger 1 einer Kraftfahrzeugkarosserie gemäß dem zweiten Ausführungsbeispiel eine Stirnseite, die gegenüber einer Längsachse des Längsträgers 1 im Wesentlichen senkrecht ausgebildet ist. Mit anderen Worten ist die Stirnseite 3 des Längsträgers 1 gemäß dem zweiten Ausführungsbeispiel gerade und nicht schräg ausgebildet. Im Unterschied zu dem ersten Ausführungsbeispiel ist jedoch der Längsträger 1 insgesamt schräg gegenüber einer der Stirnseite 3 des Längsträgers 1 zugewandten Fläche 11 eines Plattenelements 9 ausgebildet. Damit ist die Stirnseite 3 des Längsträgers 1 gemäß dem zweiten Ausführungsbeispiel analog dem ersten Ausführungsbeispiel nicht parallel und damit schräg gegenüber der der Stirnseite 3 des Längsträgers 1 zugewandten Seite 11 des Plattenelements 9 ausgebildet. Ein Winkel α kann ebenso wie bei dem ersten Ausführungsbeispiel vorteilhaft zwischen 5 und 10° betragen.

Eine Wirkungsweise im Kollisionslastfall bei einer Kollisionslast aus der Richtung 7 ist damit ähnlich wie bei dem ersten Ausführungsbeispiel. Insbesondere wird zu Beginn der Kollision die gesamte Kollisionslast nur auf einen Teilbereich des Längsträgers 1, d.h. einer Teilfläche der Stirnseite 3 des Längsträgers 1, nämlich im Wesentlichen lediglich auf eine Kante des Längsträgers 1 (in Figur 2 die untere Kante), aufgebracht.

Im Weiteren ist ein drittes Ausführungsbeispiel der vorliegenden Erfindung unter Bezugnahme auf Figur 3 beschrieben. Im Wesentlichen wird dabei auf die Unterschiede zu dem ersten und dem zweiten Ausführungsbeispiel Bezug genommen, wobei Gemeinsamkeiten zu dem ersten und zweiten Ausführungsbeispiel im Wesentlichen weggelassen sind.

Im Unterschied zu dem ersten und dem zweiten Ausführungsbeispiel ist eine hintere Stirnseite 4 eines Längsträgers 1 einer Fahrzeugkarosserie, die schräg zu einem Kollisionslastpfad 7 verläuft an einer lastabgewandten oder kollisionsabgewandten Seite des Längsträgers 1 ausgebildet. Die hintere Stirnseite 4 des Längsträgers 1 des dritten Ausführungsbeispiels ist in Kontakt mit einer der Stirnseite 4 des Längsträgers 1 zugewandten Fläche 12 eines Plattenelements 10, wobei die Stirnseite 4 schräg gegenüber der der Stirnseite 4 des Längsträgers 1 zugewandten Fläche 12 des Plattenelements 10 ausgebildet ist. Ein Winkel α der Stirnseite 4 gegenüber der der Stirnseite 3 des Längsträgers 1 zugewandten Fläche 12 des Plattenelements 10 kann dabei in einem ähnlichen Bereich wie in dem in dem ersten und zweiten Ausführungsbeispiel genannten Bereich ausgebildet sein.

Bei einem Lastfalls, d.h. einer Frontalkollision des Kraftfahrzeugs, wird eine Last von vorne aus der Richtung 7 über einen nicht dargestellten Stoßfängerquerträger und ein nicht dargestelltes Deformationselement auf das Plattenelement 9, d.h. das Verbindungselement zwischen dem Deformationselement und dem Träger 1, übertragen. Das Plattenelement 9 ist dabei in flächigem Kontakt mit einer vorderen Stirnseite des Längsträgers 1, wobei im Unterschied zu dem ersten und zweiten Ausführungsbeispiel eine Lastkonzentration in dem Längsträger 1 auf der kollisionsabgewandten Seite des Längsträgers 1 auftritt, nämlich an der Kontaktstelle zwischen der lastabgewandten, hinteren Stirnseite 4 und dem Plattenelement 10. Ein sprödes Versagen erfolgt dabei analog der Beschreibung bei dem ersten Ausführungsbeispiel.

Gemäß einem weiteren nicht dargestellten vierten Ausführungsbeispiel kann auch die einer Stirnseite des Längsträgers zugewandte Seite eines Plattenelements gegenüber der Stirnseite des Längsträgers schräg ausgebildet sein, so dass ein Winkel zwischen dem Plattenelement und der Stirnseite gebildet ist. Mit anderen Worten hat das Plattenelement eine abgeschrägte Stirnseite. Damit erfolgt ebenso wie bei dem ersten bis dritten Ausführungsbeispielen eine Lastkonzentration im Falle einer Kollision, deren Last über das Plattenelement in den Längsträger eingeleitet wird.

Grundsätzlich ist auch eine beliebige Kombination der Ausführungsbeispiele möglich. Insbesondere ist können auch beide Stirnseiten eines Längsträgers schräg zu einem Kollisionslastpfad ausgebildet sein.

## Patentansprüche

1. Karosserie für ein Kraftfahrzeug mit einem Träger (1), insbesondere einem Längsträger, der aus faserverstärktem Kunststoff, insbesondere kohlefaserverstärktem Kunststoff, ausgebildet ist und der als tragendes Strukturelement eine in einem Kollisionsfall des Kraftfahrzeugs Kollisionsenergie absorbierende Wirkung hat, wobei eine Stirnseite (3; 4) des Trägers (1) schräg in Bezug auf eine Lastebene (11; 12), die senkrecht zu einem Kollisionslastpfad (7) verläuft, ausgebildet ist,
wobei der Kollisionslastpfad (7) ein Plattenelement (9; 10) aufweist, wobei eine der Stirnseite (3; 4) des Trägers (1) zugewandte Seite (11; 12) des Plattenelements (9; 10) in Bezug auf die Stirnseite (3; 4) des Trägers (1) schräg und teilweise direkt oder indirekt an der Stirnseite (3; 4) des Trägers (1) anliegend ausgebildet ist, und
wobei der Kollisionslastpfad (7) ferner einen Stoßfängerquerträger und ein Deformationselement zur Energieabsorption bis zu einer Kollisionsenergieschwelllast aufweist.

2. Karosserie nach Patentanspruch 1, wobei ein Winkel der Stirnseite (3; 4) des Trägers gegenüber der Lastebene 1° bis 14°, bevorzugt 5° bis 10°, beträgt.

3. Karosserie nach einem der Patentansprüche 1 oder 2, wobei der Träger (1) eine Längsachse (a) aufweist und die Stirnseite (3; 4) des Trägers (1) in Bezug auf eine Ebene, die senkrecht zu der Längsachse (a) verläuft, schräg ausgebildet ist.

4. Karosserie nach einem der Patentansprüche 1 bis 3, wobei die Stirnseite (3; 4) des Trägers (1) im Wesentlichen in einer Ebene liegt.

5. Karosserie nach einem der Patentansprüche 1 bis 4, wobei der Träger (1) ein Profil mit einem offenen Querschnitt oder einem geschlossenen Querschnitt aufweist.

6. Karosserie nach Patentanspruch 5, wobei die Fasern des faserverstärkten Kunststoffes ein geschlossenes Flechtprofil ausbilden.

7. Karosserie nach einem der Patentansprüche 1 bis 6, wobei die Stirnseite (3; 4) in Bezug auf den Kollisionslastpfad (7) derart ausgebildet ist, dass zu Beginn der Kollision eine Last auf einen Punkt, eine Linie oder eine Teilfläche der Stirnseite (3; 4) des Trägers (1) wirkt.

8. Karosserie nach einem der Patentansprüche 1 bis 7, wobei der Träger (1) derart ausgebildet ist, dass er ab einer vorgegebenen Kollisionsschwelllast an der Stirnseite (3; 4) beginnend spröde versagt.

## Claims

1. A vehicle body for a motor vehicle having a support (1), especially a side member, which is formed from fibre-reinforced plastics material, especially carbon fibre-reinforced plastics material, and which as a supporting structural element has an action absorbing collision energy effect in the event of a collision of the motor vehicle, wherein an end face (3; 4) of the support (1) is formed obliquely relative to a load plane (11; 12) which runs perpendicular to a collision load path (7),
wherein the collision load path (7) has a plate element (9; 10), wherein a side (11; 12) of the plate element (9; 10) which faces the end face (3; 4) of the support (1) is formed inclined relative to the end face (3; 4) of the support (1) and lying partially directly or indirectly against the end face (3; 4) of the support (1), and
wherein the collision load path (7) further has a bumper transverse member and a deformation element for absorption of energy up to a collision energy threshold load.

2. A vehicle body according to Claim 1, wherein an angle of the end face (3; 4) of the support relative to the load plane is 1° to 14°, preferably 5° to 10°.

3. A vehicle body according to one of Claims 1 or 2, wherein the support (1) has a longitudinal axis (a) and the end face (3; 4) of the support (1) is formed obliquely relative to a plane which runs perpendicular to the longitudinal axis (a).

4. A vehicle body according to one of Claims 1 to 3, wherein the end face (3; 4) of the support (1) lies substantially in one plane.

5. A vehicle body according to one of Claims 1 to 4, wherein the support (1) has a profile with an open cross-section or a closed cross-section.

6. A vehicle body according to Claim 5, wherein the fibres of the fibre-reinforced plastics material form a closed braided profile.

7. A vehicle body according to one of Claims 1 to 6, wherein the end face (3; 4) is formed relative to the collision load path (7) such that at the beginning of the collision a load acts on a point, a line or a partial face of the end face (3; 4) of the support (1).

8. A vehicle body according to one of Claims 1 to 7, wherein the support (1) is designed such that from a specified collision threshold load onwards, beginning at the end face (3; 4), it undergoes brittle failure.

## Revendications

1. Carrosserie de véhicule comprenant un support (1), en particulier un support longitudinal réalisé en un matériau synthétique renforcé par des fibres en particulier par des fibres de carbone, et qui, en tant qu'élément de structure porteur, a une action d'absorption de l'énergie de collision en cas de collision du véhicule, un côté frontal (3, 4) du support (1) étant incliné par rapport à un plan de charge (11, 12) qui s'étend perpendiculairement au chemin d'une charge de collision (7),
le chemin d'une charge de collision (7) comportant un élément en forme de plaque (9, 10), un côté (11, 12) de l'élément en forme de plaque (9, 10) tourné vers le côté frontal (3, 4) du support (1) étant incliné par rapport au côté frontal (3, 4) du support (1) et s'appliquant partiellement directement ou indirectement sur le côté frontal (3, 4) du support (1),
le chemin d'une charge de collision (7) comportant en outre un support transversal de pare-chocs, et un élément de déformation permettant d'absorber l'énergie jusqu'à une charge de seuil d'énergie de collision.

2. Carrosserie conforme à la revendication 1,
dans laquelle l'angle du côté frontal (3, 4) du support par rapport au plan de charge est égal à 1° à 14°, de préférence à 5° à 10°.

3. Carrosserie conforme à l'une des revendications 1 et 2,
dans laquelle le support (1) comporte un axe longitudinal (a), et le côté frontal (3, 4) du support (1) est incliné par rapport à un plan perpendiculaire à l'axe longitudinal (a).

4. Carrosserie conforme à l'une des revendications 1 à 3,
dans laquelle le côté frontal (3, 4) du support (1) est essentiellement situé dans un plan.

5. Carrosserie conforme à l'une des revendications 1 à 4,
dans laquelle le support (1) a un profil ayant une section ouverte ou une section fermée.

6. Carrosserie conforme à la revendication 5,
dans laquelle les fibres du matériau synthétique renforcé par des fibres forme un profil tressé fermé.

7. Carrosserie conforme à l'une des revendications 1 à 6,
dans laquelle le côté frontal (3, 4) est réalisé par rapport au chemin d'une charge de collision (7) de sorte qu'au début de la collision, une charge agisse sur un point, une ligne ou une surface partielle du côté frontal (3, 4) du support (1).

8. Carrosserie conforme à l'une des revendications 1 à 7,
dans laquelle le support (1) est réalisé de sorte que, à partir d'une charge de seuil de collision prédéfinie, il s'affaiblisse en commençant par le côté frontal (3, 4).
